Europäisches Patentamt

**European Patent Office**

**Office européen des brevets**

(19)

(11) Veröffentlichungsnummer: **0 100 848**
**B1**

(12) **EUROPÄISCHE PATENTSCHRIFT**

(45) Veröffentlichungstag der Patentschrift:
**21.08.85**

(51) Int. Cl.⁴: **C 04 B 28/24, E 02 D 27/44**

(21) Anmeldenummer: **83106142.9**

(22) Anmeldetag: **23.06.83**

(54) Maschinenfundament und Verfahren zu seiner Herstellung.

(30) Priorität: **06.08.82 DE 3229339**
**02.02.83 DE 3303409**

(43) Veröffentlichungstag der Anmeldung:
**22.02.84 Patentblatt 84/8**

(45) Bekanntmachung des Hinweises auf die Patenterteilung:
**21.08.85 Patentblatt 85/34**

(84) Benannte Vertragsstaaten:
**AT BE CH DE FR GB IT LI LU NL SE**

(56) Entgegenhaltungen:
**DE - B - 1 184 266**
**DE - C - 148 758**
**DE - C - 687 089**

(73) Patentinhaber: **DYNAMIT NOBEL**
**AKTIENGESELLSCHAFT, Postfach 1209,**
**D-5210 Troisdorf, Bez. Köln (DE)**

(72) Erfinder: **Neuschäffer, Karl-Heinz, Dr., Böttnerstrasse 6,**
**D-5653 Leichlingen (DE)**
Erfinder: **Engels, Hans-Werner, Grabenstrasse 53,**
**D-5210 Troisdorf-Sieglar (DE)**
Erfinder: **Gebert, Hans-Jürgen, Bussardstrasse 63,**
**D-5205 St. Augustin 3 (DE)**
Erfinder: **Laube, Robert W., Dr., Augustastrasse 10,**
**D-5200 Siegburg (DE)**
Erfinder: **Zoche, Günter, Dr., Köningsheimstrasse 13,**
**D-5300 Bonn 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf ein Fundament zur erschütterungsarmen Aufstellung von Maschinen oder dgl., hergestellt durch Aushärten einer Masse in einer Form und ein Verfahren zum Herstellen solcher Fundamente. Es besteht vielfach die Aufgabe, Maschinen, die mit hoher Präzision arbeiten müssen, wie Bohrmaschinen, Fräsmaschinen, Drehmaschinen, erschütterungsarm aufzustellen, so daß möglichst keine Resonanzschwingungen entstehen und übertragen werden. Bekannt sind Maschinenfundamente aus gegossenem Stahl, Granit, Polymerbeton. Während gegossene Stahlfundamente nicht in allen Fällen brauchbar sind, da sie Resonanzschwingungen erzeugen können, Polymerbeton nicht in allen Fällen ausreichend hitzebeständig ist, erfüllt Granit die gestellten Anforderungen besser, ist jedoch sehr teuer, da die Fundamente aus Naturfelsen gebrochen und verarbeitet werden müssen.

Der Erfindung liegt die Aufgabe zugrunde, Maschinenfundamente herzustellen, die erschütterungsarmes Lagern insbesondere von Präzisionsmaschinen ermöglichen. Solche Präzisionsmaschinen sind beispielsweise Bohrmaschinen mit sehr hohen Geschwindigkeiten zum Herstellen von Präzisionslochungen oder Schleif- und Fräsmaschinen der Meßmaschinen. Unter Fundamenten sind auch Maschinengestelle oder Meßplatten zu verstehen.

Polymerbeton und seine Anwendungen sind beispielsweise in der Zeitschrift Bautechnik, 102. Jahrgang, Nr. 35 vom 2. 5. 1980, Seiten 21 bis 24 beschrieben. Polymerbeton enthält als Bindemittel Polyesterharz, Epoxidharz, oder Polymethylmetacrylatharz und als trockene Zuschlagstoffe Kiesel, Quarzsande u. ä.

Aus der EP-A-0 026 687 sind bereits anorganische Formmassen bekannt, die zu Kunstgegenständen, Werkzeugen, Industrieformen, also sehr vielfältig eingesetzt werden sollen. Diese bekannten anorganischen Formmassen haben jedoch ein relativ geringes spezifisches Gewicht, das zwischen 1,5 bis 1,8g/cm$^3$ liegt.

Der Erfindung liegt die Aufgabe zugrunde, ein erschütterungsarmes Fundament auf Basis preiswerter Rohstoffe zu schaffen, das sowohl ein hohes spezifisches Gewicht als auch gute mechanische Eigenschaften aufweist und eine einfache Formgebung ermöglicht.

Erfindungsgemäß wird die Aufgabe durch ein Fundament gelöst, das eine ausgehärtete Masse mit einem spezifischen Gewicht von 2,2 bis 3,0, insbesondere 2,5 bis 2,7 g/cm$^3$ enthält, die hergestellt ist aus 15 bis 30 Gew.-% einer wäßrigen 30 bis 65%igen kalialkalischen Kaliumsilikatlösung, wobei das Molverhältnis von $SiO_2$ zu $K_2O$ 1,0 bis 2,0 zu 1 beträgt, 15 bis 35 Gew.-% Metakaolin oder eines Oxidgemischs mit Gehalten von amorphem $SiO_2$ und Aluminiumoxid und/oder wasserhaltiger amorpher dispers-pulverförmiger Kieselsäure und 45 bis 65 Gew.-% Füllstoffen. Als Füllstoffe eignen sich bevorzugt schwere Füllstoffe, wie Korund, Schwerspat, Zirkonsand, Glimmer, Abfall aus Bauxitschmelze, Basaltmehl, Quarz, Feldspat, Granitbruch, Bleiverbindungen o. ä.

Eine vorteilhafte Weiterbildung der Erfindung ist ein Fundament nach dem Patentanspruch 2.

Fundamente mit einer anorganischen Masse gemäß der Erfindung können durch Formen in allen gewünschten Dimensionen hergestellt werden. Die Fundamente weisen durch ihr hohes spezifisches Gewicht und ihren Aufbau wenig Neigung zu Resonanzschwingungen auf und ermöglichen u. a. die erschütterungsarme Lagerung von schnellaufenden Präzisionsmaschinen. Die Oberflächen können für die Aufstellung der Maschinen nachbearbeitet werden. Die Fundamente weisen eine hohe Druckfestigkeit von mindestens 60 N/mm$^2$ und ausreichende Härte nach Mohs-Scala von ca. 6 bis 7 auf. Die wäßrige Kaliumhydroxid enthaltende Kaliumsilikatlösung bildet den Härter, der mit Bestandteilen des Oxidgemischs bzw. der wasserhaltigen Kieselsäure bzw. mit Metakaolin reagiert. Die Kaliumsilikatlösung kann eine käufliche Kaliumsilikatlösung sogenannte Wasserglaslösung sein oder erfindungsgemäß durch Auflösen von wasserhaltiger amorpher dispers-pulverförmiger Kieselsäure in einer Lösung von Kaliumhydroxid oder durch Einrühren von festem Kaliumhydroxid in die sich verflüssigende wasserhaltige amorphe Kieselsäure hergestellt werden.

Das Oxidgemisch mit Gehalten von amorphem $SiO_2$ und Aluminiumoxid hat stark wechselnde Gehalte beider Oxide, deren gemeinsamer Anteil häufig 75 bis über 90 Gew.-% des Oxidgemischs beträgt, wobei aber auch geringere Gehalte als 75 Gew.-% und höhere Gehalte sonstiger Oxide möglich sind. Das Oxidgemisch ist wasserfrei. Es besteht ausschließlich oder ganz überwiegend aus Gemischen von Oxiden. Solche Oxidgemische entstehen typischerweise bei industriellen Hochtemperatur-Schmelzprozessen als Stäube und bilden zunächst eine Dampf- oder Gasphase, aus der sie beim Abkühlen als feinverteilter Staub abgeschieden werden. Häufig entsprechen die Oxidgemische nicht mehr der Zusammensetzung des industriellen Schmelzproduktes.

Im Röntgenogramm finden sich keine Hinweise auf kristallines $SiO_2$, während $Al_2O_3$ kristallin zumindest zum Teil als $\alpha$-$Al_2O_3$ (Korund) und in wechselnden Anteilen als alkalihaltiges $\beta$-$Al_2O_3$ vorliegt. Eisenoxide können anwesend sein, z. B. als $Fe_2O_3$. Erdalkalien, besonders CaO, sind gegebenenfalls in geringen Mengen anwesend. Geringe Anteile von Fluoriden, $P_2O_5$ oder $ZrO_2$ können in Abhängigkeit vom jeweiligen Schmelzpunkt vorkommen.

Die Oxidgemische können 7 bis 75 Gew.-% $SiO_2$ und 12 bis 87 Gew.-% $Al_2O_3$ enthalten, wobei hohe $SiO_2$-Gehalte oder hohe $Al_2O_3$-Gehalte je nach Art des Schmelzprozesses, jedoch auch bei demselben Schmelzprozeß am Beginn oder Ende einer »Ofenreise« auftreten können. Geeignete Oxidgemische entstehen bei Schmelzprozessen der Herstellung verschiedener Korund-Typen, des Mullits gegebenenfalls auch bei der Herstellung von elementarem Silicium, Ferrosilicium oder bei der Metallverhüttung.

Kennzeichnend für die Verwendung der Oxidgemische gemäß der Erfindung ist die Unlöslichkeit in Alkalisilikat-Lösungen bei Herstellung der Formmasse und die Reaktionsfähigkeit mit wäßriger Alkalisilikatlösung bzw. mit wäßriger Alkalihydroxidlösung in der wasserhaltigen Formmasse zum steinbildenden Bestandteil der Formkörper.

Die amorphe dispers-pulverförmige wasserhaltige Kieselsäure liegt als lagerfähiges und rieselfähiges Pulver, filterfeucht oder als breiiges Gel vor.

Der Wassergehalt kann 20 bis 60 Gew.-% oder gegebenenfalls mehr betragen, wobei die Trockensubstanz zu 85 bis 100 Gew.-% analytisch als $SiO_2$ bestimmt wird, neben kleineren Anteilen von u. a. Aluminiumoxid, Eisenoxid, Metallfluoriden, ggf. Ammoniumfluorid sowie Glühverlust. Solche amorphen dispers-pulverförmigen wasserhaltigen Kieselsäuren werden im allgemeinen durch Fällung aus wäßrigen Lösungen erhalten, beispielsweise bei der Gewinnung und Reinigung mineralischer Ausgangsstoffe der Aluminiumindustrie beispielsweise bei der Umsetzung von $H_2SiF_6$ zu Alkalifluoriden oder Kryolith oder auch aus anderweitig erhaltenen wäßrigen Silikatlösungen. Bei diesen in zahlreichen industriellen Prozessen abzutrennenden amorphen wasserhaltigen Kieselsäuren kommt es nur darauf an, daß wasserhaltigen Kieselsäuren d. h. hydratisierte nichtoxidische Kieselsäuren in amorpher, feinverteilter und bei der Steinbildung reaktionsfähiger Form vorliegen. Als besonders vorteilhaft hat sich der Zusatz von Bauxitabfall erwiesen, da er eine relativ hohe Festigkeit des Fundaments bewirkt.

Die für die Erfindung einsetzbaren Füllstoffe sind nicht auf die aufgezählten beschränkt, sondern es können auch andere geeignete Stoffe, insbesondere wenn sie das spezifische Gewicht in den gewünschten Bereich erhöhen bzw. die Festigkeiten erhöhen, eingesetzt werden.

Eine bevorzugte Zusammensetzung einer Masse für die erfindungsgemäßen Fundamente enthält 22 bis 27 Gew.-% einer wäßrigen 30 bis 65%igen kalialkalischen Kaliumsilikatlösung, wobei auf 1,3 bis 1,55 Mol $SiO_2$ 1 Mol $K_2O$ kommen, 18 bis 23 Gew.-% Metakaolin, 10 bis 15 Gew.-% Aluminiumoxid in pulvriger bis feinkörniger Form, 10 bis 15 Gew.-% Schwerspat, 10 bis 15 Gew.-% Zirkonsand in Naturform, 10 bis 15 Gew.-% Bauxitabfall und 0 bis 10 Gew.-% Glimmer, Schiefermehl, Quarzmehl oder dgl. Die Füllstoffe können in mehliger feinpulvriger bis feinkörniger und gröberkörniger Form eingesetzt werden. Bevorzugt wird hierbei eine Mischung von Stauben und feinen Körnungen. Es ist auch möglich, in Weiterbildung der Erfindung die Fundamente mit Armierungen aus Metall, Drahteinlagen, Matten oder dgl. zu versehen, die in die Form mit eingelegt werden. Diese sind z. B. auch erforderlich, um ggf. bei großen Fundamenten den Transport zu ermöglichen, d. h. eine Befestigungsmöglichkeit zu schaffen.

Als besonders vorteilhaft hat sich der Zusatz von Bauxitabfall erwiesen, da er eine relativ hohe Festigkeit des Fundamentes bewirkt.

Die für die Erfindung einsetzbaren Füllstoffe sind nicht auf die aufgezählten beschränkt, sondern es können auch andere geeignete Stoffe, insbesondere wenn sie das spezifische Gewicht in den gewünschten Bereich erhöhen bzw. die Festigkeiten erhöhen, eingesetzt werden.

Das Verfahren zum Herstellen eines erfindungsgemäßen Fundamentes arbeitet in der Weise, daß zuerst aus den Feststoffen eine Feststoffmischung hergestellt wird, dann unter Kühlen der Mischung auf eine Temperatur unter 30° C vorzugsweise unter 25° C die Kaliumhydroxid enthaltende Kaliumsilikatlösung zugemischt wird, danach die Mischung entlüftet wird und zwar entweder vor dem Einbringen in die Form oder in der Form, und dann bei einer Temperatur unter 100" C, vorzugsweise im Bereich von 60 bis 95° C in der Form ausgehärtet wird. Die Aushärtezeit richtet sich hierbei nach den Dimensionen des Fundamentes und liegt bei sehr kleinen Dimensionen bei einer halben Stunde und kann bis zu mehreren Tagen andauern. Vorteilhaft kann ggf. noch eine Nachtrocknungszeit nach der Aushärtungszeit angeschlossen werden, wobei eine Festigkeitssteigerung durch Nachhärten erzielt werden kann. Diese Nachtrocknungszeit kann nach dem Entformen nochmals in einer Temperung bei etwa 50°C während 3 bis 5 Tagen oder aber einfach durch längere Lagerzeiten an der Luft bewirkt werden.

Die bevorzugte Zusammensetzung der Masse liegt bei

a)  16 bis 25 Gew.-% einer wäßrigen 30 bis 65 gew.-%igen kalialkalischen Kaliumsilikatlösung,
b)  20 bis 33 Gew.-% Oxidgemisch und/oder wasserhaltiger amorpher Kieselsäure bzw. ganz oder teilweise Metakaolin und
c)  45 bis 65 Gew.-% Füllstoffen.

Als Füllstoffe wird ein Gemisch von verschiedenen der genannten Füllstoffe bevorzugt. Soweit die Kaliumsilikatlösung durch Auflösen aus wasserhaltiger amorpher Kieselsäure hergestellt wurde, kann die Komponente b) auch ganz oder teilweise aus Metakaolin bestehen.

Das Gewichtsverhältnis der kalialkalischen Kaliumsilikatlösung zu der Komponente b) soll vorzugsweise bei 0,5 : 1 bis 1,5 : 1 liegen.

0 100 848

## Beispiel 1

20 kg eines Oxidgemisches, enthaltend 42 Gew.-% größtenteils amorphes, reaktionsfähiges Siliciumdioxid, 50 Gew.-% Aluminiumoxid, 2 Gew.-% Eisenoxid sowie kleinere Anteile weiterer Oxide werden mit je 11 kg Korundpulver und Schwerspatpulver, mit je 13 kg Zirkonsand und Bauxitabfall, mit 6 kg Glimmer und 1,5 kg Farbpigmenten und 24,5 kg einer kalialkalischen Kaliumsilikatlösung, die durch Auflösen von Kaliumhydroxid in Kaliumwasserglaslösung hergestellt wurde, wobei ein Molverhältnis $SiO_2 : K_2O$ von 1,5 : 1 und ein Wassergehalt von 50 Gew.-% eingestellt wurde, intensiv gemischt und die untere Kühlung erhaltene Gießmasse in eine Form gegossen, entlüftet und bei 90°C gehärtet.

## Beispiel 2

13,3 kg eines Oxidgemischs, enthaltend 36 Gew.-% größtenteils amorphes, reaktionsfähiges Siliciumdioxid, 56 Gew.-% Aluminiumoxid, 5 Gew.-% Eisenoxid sowie kleinere Mengen weiterer Oxide werden mit je 4,5 kg Korrundpulver, Schwerspatpulver, Zirkonsand und Bauxitabfall und 8,5 kg einer kalialkalischen Kaliumsilikatlösung mit einem Molverhältnis $SiO_2 : K_2O$ von 1,4, die durch Auflösen einer wasserhaltigen amorphen Kieselsäure von 50 Gew.-% Feststoffgehalt in einer wässrigen Kaliumhydroxidlösung hergestellt worden war, intensiv zu einer homogenen Gießmasse unter Kühlen gemischt, in eine Form gegossen, entlüftet und bei 85°C gehärtet.

## Beispiel 3

Aus den nachfolgenden Bestandteilen:

| | |
|---|---|
| Metakaolin | 20 Gew.-Teile |
| Aluminiumoxid | 12 Gew.-Teile |
| Schwerspatmehl | 13 Gew.-Teile |
| Zirkonsand, natur | 12 Gew.-Teile |
| Glimmer | 6 Gew.-Teile |
| Bauxitabfall | 13 Gew.-Teile |

wurde eine Feststoffmischung hergestellt, danach der Härter und zwar 25 Gew.-Teile einer wäßrigen 50% kalialkalischen Kaliumsilikatlösung, wobei das Molverhältnis von $SiO_2$ zu $K_2O$ 1,35 zu 1 betrug, zugegeben. Unter Kühlen der Mischung so daß eine Temperatur von 30°C in keinem Fall überschritten wurde, wurde fertiggemischt, entlüftet und dann die Mischung in eine Form getan und verdichtet durch Rütteln. Mit der Form wurde ein Fundamentblock in der Größe 100 × 100 × 20 cm hergestellt, der ein spezifisches Gewicht von 2,55 g/cm³ aufwies, eine Druckfestigkeit von 90 N/mm² und eine Oberflächenhärte nach Mohs von 7.

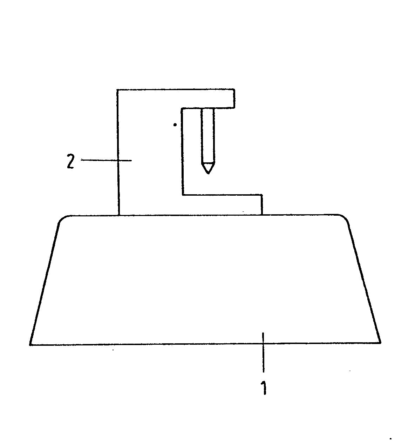

In der Figur ist schematisch ein Fundamentblock zur Lagerung von Maschinen dargestellt, wobei 1 das Fundament und 2 die Maschine bezeichnet.

## Patentansprüche

1. Fundament zur erschütterungsarmen Aufstellung von Maschinen oder dgl., hergestellt durch Aushärten einer Masse in einer Form, dadurch gekennzeichnet, daß es eine ausgehärtete anorganische Masse mit einem spezifischen Gewicht von 2,2 bis 3,0 insbesondere 2,5 bis 2,7 g/cm³ enthält, hergestellt aus 15 bis 30 Gew.-% einer wäßrigen 30 bis 65%igen kalialkalischen Kaliumsilikatlösung, in der das Molverhältnis von $SiO_2$ zu $K_2O$ 1,0 bis 2,0 zu 1 beträgt; 15 bis 35 Gew.-% eines Oxidgemischs mit Gehalten von amorphem $SiO_2$ und Aluminiumoxid und/oder aus wasserhaltiger amorpher disperspulverförmiger Kieselsäure oder Metakaolin und 45 bis 65 Gew.-% Füllstoffen.

2. Fundament nach Anspruch 1, dadurch gekennzeichnet, daß es eine ausgehärtete anorganische Masse mit einem spezifischen Gewicht von 2,2 bis 3,0 insbesondere 2,5 bis 2,7 g/cm³ enthält, hergestellt aus 15 bis 30 Gew.-% einer wäßrigen 30 bis 65%igen kalialkalischen Kaliumsilikatlösung , in der das Molverhältnis von $SiO_2$ zu $K_2O$ 1,0 bis 2,0 zu 1 beträgt, wobei die Kaliumsilikatlösung durch Auflösen von wasserhaltiger amorpher dispers-pulverförmiger Kieselsäure in Kaliumhydroxid oder dessen wäßriger Lösung hergestellt wurde, 15 bis 35 Gew.-% Metakaolin und/oder eines Oxidgemischs mit Gehalten von amorphem $SiO_2$ und Aluminiumoxid und/oder wasserhaltiger amorpher dispers-pulverförmiger Kieselsäure und 45 bis 65 Gew.-% Füllstoffen.

3. Fundament nach Anspruch 1, dadurch gekennzeichnet, daß es eine ausgehärtete anorganische Masse mit einem spezifischen Gewicht von 2,2 bis 3,0, insbesondere 2,5 bis 2,7 g/cm³ enthält, die hergestellt ist aus

| 20 bis 30 Gew.-% | einer wäßrigen 30 bis 65%iger kalialkalischen Kaliumsilikatlösung, in der das Molverhältnis von $SiO_2$ zu $K_2O$ 1,3 bis 1,55 zu 1 beträgt, |
| 15 bis 25 Gew.-% | Metakaolin und |
| 45 bis 65 Gew.-% | Füllstoffen. |

4. Fundament nach einem der Ansprüche 1 bis 3, dadurch gekennzeichnet, daß als Füllstoff Aluminiumoxid, Schwerspat, Zirkonsand, Glimmer, Abfälle aus Bauxitschmelze, Basaltmehl, Quarz, Feldspat, Granitbruch, Bleiverbindungen oder Gemische dieser Stoffe verwendet sind.

5. Fundament nach Anspruch 3, gekennzeichnet durch eine Masse enthaltend

| 22 bis 27 Gew.-% | einer wässrigen 30 bis 65%igen kalialkalischen Kaliumsilikatlösung, in der das Molverhältnis von $SiO_2$ zu $K_2O$ 1,3 bis 1,55 zu 1 ist, |
| 18 bis 23 Gew.-% | Metakaolin, |
| 10 bis 25 Gew.-% | Aluminiumoxid in Form von Korund, |
| 10 bis 15 Gew.-% | Schwerspat, |
| 10 bis 15 Gew.-% | Zirkonsand, |
| 10 bis 15 Gew.-% | Bauxitabfall, |
| 0 bis 10 Gew.-% | Glimmer, Schiefermehl, Quarzmehl oder dgl. |

6. Fundament nach einem der Ansprüche 1 bis 5, dadurch gekennzeichnet, daß es Armierungen aus Metall, Drahteinlagen, Matten oder dgl. enthält.

7. Verfahren zum Herstellen eines Fundamentes nach einem der Ansprüche 1 bis 6, bei dem eine Masse in einer Form ausgehärtet wird, dadurch gekennzeichnet, daß zuerst aus den Feststoffen eine Feststoffmischung hergestellt wird, dann unter Kühlen der Mischung auf Temperaturen unter 30°C vorzugsweise unter 25°C die wäßrige kalialkalische Kaliumsilikatlösung zugemischt wird, dann die Mischung in die Form gebracht, ggf. verdichtet und bei einer Temperatur unter 100°C, vorzugsweise im Bereich von 60 bis 95°C, ausgehärtet wird.

8. Verfahren nach Anspruch 7, dadurch gekennzeichnet, daß die Mischung vor dem Einbringen in die Form bzw. in der Form entlüftet wird.

## Claims

1. Base for the low-vibrational installation of machines or the like, produced by hardening of a composition in a mould, characterised in that it contains a hardened inorganic composition with a specific gravity of 2,2 to 3,0, in particular 2,5 to 2,7 $g/cm^3$, produced from 15 to 30% by weight of an aqueous 30 to 65% potassium silicate solution alkaline with potassium hydroxide, in which the molar ratio of $SiO_2$ to $K_2O$ amounts to 1,0 to 2,0 : 1; 15 to 35% by weight of an oxide mixture with contents of amorphous $SiO_2$ and aluminium oxide and/or from water-containing amorphously dispersed pulverous silicic acid or metakaolin and 45 to 65% by weight of fillers.

2. Base according to claim 1, characterised in that it contains a hardened inorganic composition with a specific gravity of 2,2 to 3,0, in particular 2,5 to 2,7 $g/cm^3$, produced from 15 to 30% by weight of an aqueous 30 to 65% potassium silicate solution alkaline with potassium hydroxide, in which the molar ratio of $SiO_2$ to $K_2O$ amounts to 1,0 to 2,0 : 1, with the potassium silicate solution having been produced by dissolation of water-containing amorphously dispersed pulverous silicic acid in potassium hydroxide or its aqueous solution, 15 to 35% by weight of metakaolin and/or an oxide mixture with contents of amorphous silica and aluminium oxide and/or water-containing amorphously dispersed pulverous silicic acid and 45 to 65% by weight of fillers.

3. Base according to claim 1, characterised in that it contains a hardened inorganic composition with a specific gravity of 2,2 to 3,0, in particular 2,5 to 2,7$g/cm^3$, which is produced from

| 20 to 30% by weight | of an aqueous 30 to 65% potassium silicate solution alkaline with potassium hydroxide, in which the molar ratio of $SiO_2$ to $K_2O$ amounts to 1,3 to 1,55 : 1, |
| 15 to 25% by weight | metakaolin and |
| 45 to 65% by weight | of fillers. |

4. Base according to one of claims 1 to 3, characterised in that there are used as filler aluminium oxide, heavy spar, zircon sand, glimmer, waste from bauxite melts, ground basalt, quartz, felspar, granite fragments, lead compounds or mixtures of these substances.

5. Base according to claim 3, characterised by a composition containing

| 22 to 27% by weight | of an aqueous 30 to 65% potassium silicate solution alkaline with potassium hydroxide, in which the molar ratio of $SiO_2$ to $K_2O$ is 1,3 to 1,55, |
| 18 to 23% by weight | of metakaolin, |

10 to 25% by weight   of aluminium oxide in the form of corundum,
10 to 15% by weight   of heavy spar,
10 to 15% by weight   of zircon sand,
10 to 15% by weight   of bauxite waste,
0 to 10% by weight   of glimmer, ground slate, silica flour or the like.

6. Base according to claim 1 or 5, characterised in that it contains reinforcements made of metal, wire inlays, mats or the like.

7. Process for the production of a base according to one of claims 1 to 6, in which a composition is hardened in a mould, characterised in that first a solids mixture is produced from the solids, then the aqueous potassium silicate solution alkaline with potassium hydroxide is mixed in while cooling the mixture to temperatures below 30°C, preferably below 25°C, then the mixture is placed in the mould, optionally compacted and is hardened at a temperature below 100°C, preferably in the region of 60 to 95°C.

8. Process according to claim 7, characterised in that the mixture is freed of air before introduction into the mould or while in the mould.


**Revendications**

1. Socle pour le montage antivibratile de machines et similaires réalisé par durcissement d'une masse dans un moule, caractérisé en ce qu'il renferme une masse inorganique durcie ayant une masse spécifique de 2,2 à 3,0, en particulier de 2,5 à 2,7 g/cm$^3$ obtenue à partir de 15 à 30% en poids d'une solution potassique aqueuse de 30 à 65% de silicate de potassium dans laquelle le rapport molaire de SiO$_2$ à K$_2$O s'étend de 1 à 2 : 1, de 15 à 35% en poids d'un mélange d'oxydes renfermant du SiO$_2$ amorphe et de l'oxyde d'aluminium et/ou de l'acide silicique hydraté amorphe, pulvérulent, dispersé ou du métakaolin et de 45 à 65% en poids de matières de charge.

2. Socle selon la revendication 1, caractérisé en ce qu'il renferme une masse inorganique durcie ayant une masse spécifique de 2,2 à 3,0, en particulier de 2,5 à 2,7 g/cm$^3$ obtenue à partir de 15 à 30% en poids d'une solution potassique aqueuse de 30 à 65% de silicate de potassium dans laquelle le rapport molaire de SiO$_2$ à K$_2$O s'étend de 1 à 2 : 1, la solution de silicate de potassium ayant été préparée par dissolution d'acide silicique hydraté amorphe, pulvérulent, dispersé, dans de l'hydroxyde de potassium ou dans sa solution aqueuse, de 15 à 35% en poids de métakaolin et/ou d'un mélange d'oxydes contenant du SiO$_2$ amorphe et de l'oxyde d'aluminium et/ou de l'acide silicique hydraté amorphe, pulvérulent, dispersé et de 45 à 65% en poids de matières de charge.

3. Socle selon la revendication 1, caractérisé en ce qu'il renferme une masse inorganique durcie d'une masse spécifique de 2,2 à 3,0, en particulier de 2,5 à 2,7 g/cm$^3$ qui est obtenue à partir de

| | |
|---|---|
| 20 à 30% en poids | d'une solution potassique aqueuse de 30 à 65% de silicate de potassium dans laquelle le rapport molaire de SiO$_2$ à K$_2$O s'étend de 1,3 à 1,55 : 1, de |
| 15 à 25% en poids | de métakaolin et de |
| 45 à 65% en poids | de matières de charge. |

4. Socle selon l'une des revendications 1 à 3, caractérisé en ce qu'on met en oeuvre, en tant que matières de charge, de l'oxyde d'aluminium, de la baryte, du sable de zircon, du mica, des déchets de fusion de la bauxite, de la poudre de basalte, du quartz, du feldspath, des fragments de granit, des composés de plomb ou des mélanges de ces substances.

5. Socle selon la revendication 3, caractérisé par une masse contenant

| | |
|---|---|
| 22 à 27% en poids | d'une solution potassique aqueuse de 30 à 65% de silicate de potassium dans laquelle le rapport molaire de SiO$_2$ à K$_2$O est de 1,3 à 1,55 : 1, |
| 18 à 23% en poids | de métakaolin, |
| 10 à 25% en poids | d'oxyde d'aluminium sous forme de corindon, |
| 10 à 15% en poids | de baryte, |
| 10 à 15% en poids | de sable de zircon, |
| 10 à 15% en poids | de déchets de bauxite, |
| 0 à 10% en poids | de mica, de poudre d'ardoise, de poudre de quartz et similaires. |

6. Socle selon l'une des revendications 1 à 5, caractérisé en ce qu'il est renforcé par du métal, des inclusions de fils, des mats et similaires.

7. Procédé de fabrication d'un socle selon l'une des revendications 1 à 6 dans lequel une masse est durcie dans un moule, caractérisé en ce qu'on réalise tout d'abord un mélange à partir des matières solides, que la solution potassique aqueuse de silicate de potassium est ensuite incorporée par refroidissement du mélange à des températures au-dessous de 30°C, de préférence au-dessous de 25°C, que le mélange est ensuite introduit dans le moule, éventuellement comprimé et durci à une température au-dessous de 100°C, de préférence dans l'intervalle de 60 à 95°C.

8. Procédé selon la revendication 7, caractérisé en ce que le mélange est désaéré avant introduction dans le moule ou dans le moule lui-même.

1/1